# EUROPÄISCHE PATENTSCHRIFT

(11) **EP 0 937 576 B1**
(45) Veröffentlichungstag und Bekanntmachung des Hinweises auf die Patenterteilung: **29.09.2004**
(21) Anmeldenummer: 99102262.5
(22) Anmeldetag: 05.02.1999
(51) Int. Cl.: A22C 13/00, B32B 27/34, B65D 65/40, C08L 77/00

(54) **Flexible, polyamidhaltige Mehrschichtfolie mit verbesserter Thermoformbarkeit durch Befeuchtung**
Flexible multilayered film comprising polyamide with good thermoformability by humidification
Feuille multicouche souple contenant du polyamide, thermoformable par humidification

(30) Priorität: 17.02.1998 DE 19806468
(43) Veröffentlichungstag der Anmeldung: 25.08.1999
(73) Patentinhaber: Wipak Walsrode GmbH & Co. KG, 29656 Walsrode (DE)
(72) Erfinder: Eggers, Holger, Dr., 29664 Walsrode (DE); Kaschel, Gregor, Dr., 29699 Bomlitz (DE); Gasse, Andreas, Dr., 29664 Walsrode (DE)
(74) Vertreter: Kutzenberger, Helga, Dr.

(56) Entgegenhaltungen:
- EP-A- 0 530 549
- EP-A- 0 603 676
- EP-A- 0 603 678
- EP-A- 0 640 289
- EP-A- 0 758 527

## Beschreibung

Die vorliegende Erfindung betrifft eine mehrschichtige siegelbare Folie mit wenigstens einer polyamidhaltigen Schicht, gegebenenfalls einer oder mehrerer EVOH-haltiger Schichten sowie einer mindestens einlagig ausgeführten Siegelschicht, insbesondere für die Herstellung von thermogeformten Verpackungen. Die Mehrschichtfolie ist gekennzeichnet durch einen Feuchtegehalt, bezogen auf das Gesamtgewicht der polyamidhaltigen Schichten und der EVOH-haltigen Schichten von wenigstens 0,5 % und höchstens 2,5 %. Die erfindungsgemäße Mehrschichtfolie zeichnet sich durch verbesserte Tiefzieheigenschaften, insbesondere eine verbesserte Ausformung und eine Verringerung von streifenförmigen, ungleichmäßig ausgeformten Bereichen, durch sehr gute Maschinenlaufeigenschaften sowie eine hohe Durchstichfestigkeit aus. Die erfindungsgemäße Mehrschichtfolie läßt sich sehr kostengünstig produzieren. Die Erfindung umfaßt auch die Verwendung der genannten Mehrschichtfolie für Verpackungen, insbesondere für Lebensmittel.

Lebensmittel werden häufig auf Thermoform-Füll-Siegelmaschinen, auch Tiefziehmaschinen genannt, in Muldenpackungen aus einer thermogeformten Muldenfolie sowie einer glatt zulaufenden Deckelfolie verpackt. Beide Folien werden nach Tiefzug und Applikation des Füllgutes in die so hergestellte Mulde miteinander durch Heißsiegelung zu einem geschlossenen Container verbunden. Die Funktionsweise solcher Maschinen sowie der Aufbau auf solchen Maschinen bevorzugt verarbeiteter Folien ist beispielsweise in *The Wiley Encyclopedia of Packaging Technology* (Hrg. M. Bakker, D. Eckroth; John Wiley & Sons, 1986) sowie in *Nentwig* (Joachim Nentwig: Kunststoff-Folien, Carl Hanser Verlag 1994, München) niedergelegt.

In vielen Anwendungen ist es für das Einlegen des Füllguts von entscheidender Bedeutung, daß sich die Folie an die vom Formwerkzeug vorgegebenen Muldenkonturen anpassen kann und die so erhaltene neue Kontur auch in möglichst hohem Maße nach Verlassen der Formstation beibehält. Nimmt die Folie hingegen die Werkzeugkonturen wegen einer zu schlechten Verformbarkeit gar nicht erst ein oder ändern sich, etwa durch Rückschrumpf, die Konturen nachträglich wieder, so ist eine Applikation des Füllguts in die Mulde unter Umständen aus räumlichen Gründen nicht mehr gegeben. Eine solche Anforderung stellt sich beispielsweise bei der Verpackung von geräuchertem Schinken, der in vielen Fällen auf eine näherungsweise kubische Form mit scharf ausgeprägten Kanten und Ecken zurechtgeschnitten ist. So ergibt sich die Notwendigkeit, auch eine entsprechend scharfkantig ausgeformte, d.h. möglichst vollständig den Konturen des Tiefziehwerkzeugs angepaßte, Mulde bereitzustellen. Sind die Muldenecken hingegen wegen mangelhafter Ausformbarkeit der Folie zu rund ausgebildet, so kann der zu verpackende Schinken nicht vollständig in die Mulde eingelegt werden. Begegnet man diesem Problem dann durch eine Erhöhung der Ziehtiefe bei gleicher Muldenkontur, so paßt der Schinken zwar in die Mulde hinein, doch kann wegen der schlechten Übereinstimmung der Konturen von Schinken und Mulde im Bereich der Muldenecken und des Muldenbodens die dort befindliche Folie beim späteren Anlegen von Vakuum unerwünschte Falten bilden.

Werden Füllgüter mit festen, insbesondere scharfkantigen, Bestandteilen verpackt, so ergibt sich als wesentliche zusätzliche Anforderung der im folgenden auch als Durchstichfestigkeit bezeichnete hohe Widerstand gegenüber dem Durchstich solcher Füllgutsegmente durch die Verpackungsfolie. Auch die Anforderung nach einer hohen Durchstichfestigkeit stellt sich beispielsweise für die Fleischverpackung, insbesondere wenn die zu verpackende Fleischportion Knochen bzw. Knochensplitter enthalten kann. Ein geeignetes Meßverfahren für die Durchstichfestigkeit ist im Zusammenhang mit den Beispielen beschrieben.

Die Ausführung von mehrschichtigen, flexiblen Tiefziehfolien nach dem Stand der Technik wird im folgenden dargestellt.

In EP640289 werden füllfertig konditionierte Wursthüllen des Typs Polyamid/Polyolefin mit EVOH und einer hydrophilen, siegelfähigen, aliphatischen PA-Außenschicht der Referenz EP248860 beschrieben. Im gleichen Dokument werden 5 Gew.-% Wasser im PA-Anteil erwähnt.

Für die Beschreibung der in den einzelnen Schichten enthaltenen Polymere gilt die Übereinkunft, daß, wenn nicht anderweitig kenntlich gemacht, Kurzzeichen für Kunststoffe nach DIN 7728 bzw. ISO 1043-1987 (E) verwendet werden.

Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch doppelte Schrägstriche, wiedergegeben. Die Seite der Siegelschicht ist dabei stets rechts. Dabei kann auch nur ein Teil der gesamten, die Folie ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Mischungen aus unterschiedlichen Polymeren werden durch das Kennzeichen + sowie die Zusammenfassung der Komponenten in Klammern, ( ), kenntlich gemacht. Gegebenenfalls können hier zusätzlich Angaben zur prozentualen Zusammensetzung gemacht werden. Wenn nicht anders angegeben handelt es sich in solchen Fällen stets um Gewichtsanteile, die auf das Gesamtgewicht der Mischung bezogen sind. So beschreibt beispielsweise der Ausdruck ...//PA//EVOH//...//(PE-LD+PE-LLD)//d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (EVOH) bestehenden Schicht, gefolgt von einer nicht spezifizierten Schicht oder Schichtenfolge, gefolgt von einer Schicht, die eine Mischung aus Polyethylen niedriger Dichte (PE-LD) und einem Ethylen/a-Olefin-Copolymerisat (PE-LLD) umfaßt, sowie einer mit d näher zu spezifizierenden, auf der Siegelseite folgenden Schicht.

Die Angabe von Schmelzpunkten bezieht sich im folgenden auf den nach ASTM 3418 mit DSC-Analyse (Differential Scanning Calorimetry Analyse) bestimmten Wert.

Üblicherweise sind flexible, thermoformbare und heißsiegelbare Folien mehrschichtig aufgebaut und enthalten eine oder mehrere Schichten aus Polyamid (PA) oder Mischungen mit Polyamid. Als Polyamid wird überwiegend PA6, d.h. Polycaprolactam, eingesetzt. Es kommen, insbesondere für Spezialanwendungen mit hohen Anforderungen, aber auch andere PA-Typen wie die in untenstehender Tabelle genannten, zum Einsatz. Die polyamidhaltigen Schichten verleihen der Folie eine hohe mechanische Stabilität bei Raumtemperatur und üblichen Gebrauchstemperaturen. Bei Erwärmung erweichen sie und erlauben somit eine thermische Verformung der Folie zu einer Mulde.

Unter "Polyamid" versteht man im weitesten Sinne polymere Verbindungen, die durch die Säureamid-Gruppe ― NH · CO ― miteinander verknüpft sind (siehe auch Kohan (Hrsg.): Nylon Plastics Handbook, Hanser Publishers, 1995, München). Polyamide lassen sich durch die sie enthaltenden Monomere charakterisieren. Man unterscheidet Polyamide, die aus einem Monomer durch Polykondensation von w-Aminocarbonsäuren oder Polymerisation ihrer Lactame zum Polyamid 6-Typ erhalten werden, solche, die aus mindestens je einem Monomer vom Typ Diamin und Dicarbonsäure durch Polykondensation zum Polyamid 66-Typ entstehen. Als dritte Gruppe, im folgenden Copolyamide genannt, werden solche Polyamide verstanden, die sowohl Lactame als auch Diamine und Dicarbonsäuren oder mehr als jeweils ein Diamin und eine Dicarbonsäure enthalten.

Beispiele für Lactame sind ε-Caprolactam und ε-Laurinlactam. Diamine sind beispielsweise m-Xylylendiamin oder Hexamethylendiamin, mögliche Dicarbonsäuren sind Adipinsäure, Sebacinsäure, Isophthalsäure, Terephthalsäure oder Dodekandisäure.

Die Kennzeichnung der Polyamide erfolgt durch Zahlen, welche die Anzahl der C-Atome im Ausgangsstoff bzw. - bei zwei Komponenten - im Diamin (erste Zahl) und in der Dicarbonsäure (zweite Zahl) angeben bzw. durch eine Abkürzung der Bezeichnung des Diamins oder der Dicarbonsäure (z.B. PA MXD6 aus dem Diamin m-Xylylendiamin und der Dicarbonsäure Adipinsäure).

| *Beispiele für Polyamide und ihre Monomere* | | | |
|---|---|---|---|
| Kurzzeichen | ω-Aminocarbonsäure bzw. Lactame | Diamin | Dicarbonsäure |
| PA 6 | ε-Caprolactam | - | - |
| PA 11 | 11-Aminoundecansäure | - | - |
| PA 12 | ε-Laurinlactam | - | - |
| PA 66 | - | Hexamethylendiamin | Adipinsäure |
| PA 610 | - | Hexamethylendiamin | Sebacinsäure |
| PA 6I | - | Hexamethylendiamin | Isophthalsäure |
| PA MXD6 | - | m-Xylylendiamin | Adipinsäure |
| PA 6/66 | ε-Caprolactam | Hexamethylendiamin | Adipinsäure |
| PA 6/6T | ε-Caprolactam | Hexamethylendiamin | Terephthalsäure |
| PA 6I/6T | - | Hexamethylendiamin | Isophthalsäure und Terephthalsäure |
| PA 6/6I | ε-Caprolactam | Hexamethylendiamin | Isophthalsäure |
| PA 612 | - | Hexamethylendiamin | Dodekandisäure |

Die oben genannten Eigenschaften gute Ausformung" und hohe Durchstichfestigkeit" werden auch in Mehrschichtfolien maßgeblich durch die Auswahl des Polyamidtyps beeinflußt.

Erfahrungsgemäß läßt sich eine gute Ausformung durch die Verwendung von Polyamiden mit niedriger Kristallinität erzielen. Die geringe Kristallisationsneigung wiederum läßt sich durch sich sterisch behindernde Moleküle über eine Copolymerisation erreichen. Dies gilt für rein aliphatische Systeme wie etwa PA 6/66 oder für Copolymerisate aus aliphatischen Elementen mit aromatischen Bestandteilen wie beispielsweise PA 6/6I oder PA 6/6T. Ein zu hoher Anteil von aromatischen Gruppen führt andererseits auf eine ebenfalls sterisch bedingte Versprödung des Materials und eine Behinderung des Tiefzugs. Eine geringe Kristallinität kann aber nach dem Stand der Technik auch durch eine schnelle Abkühlung des Polyamids aus dem geschmolzenen Zustand erfolgen. In diesen Fällen findet jedoch über einem längeren Zeitraum im Anschluß an die eigentliche Produktion der Folie eine Nachkristallisation statt, wodurch die Mehrschichtfolie, bedingt durch die mit der Nachkristallisation einhergehende Dimensionsänderung des in der Folie enthaltenen Polyamid, einrollen und/oder mit der Folge von Planlagemängeln auf dem Wickel stark schrumpfen kann.

Die Durchstichfestigkeit nimmt mit der Dicke der polyamidhaltigen Schicht zu. Eine hohe Durchstichfestigkeit läßt sich auf zweifache Weise erreichen. Einerseits kann sie über eine hohe Flexibilität, d.h. durch die Erfordernis eines langen Deformationswegs bis zum Durchstich, erreicht werden. Eine hohe Durchstichfestigkeit läßt sich bei steiferen und spröderen Materialien alternativ aber auch durch hohe erforderliche Durchstichkräfte bei vergleichsweise geringen Deformationen der Folie, auch als Durchstichweg bezeichnet, erreichen. Ein geeignetes Gesamtmaß ist die Durchsticharbeit, die sich integral aus der Durchstichkraft über dem -weg errechnet. Als günstige Polyamide erweisen sich dabei besonders hochmolekulare Polyamide sowie Polyamide mit einem hohen Amidgruppenanteil. Eine Reduktion der Kristallinität verschiebt den Charakter des Polyamids von einem steifen und spröden Material hin zu einem weichen und flexiblen Stoff. Der Widerstand gegenüber einem Durchstich ist dabei mit steigender Kristallinität durch eine zunehmende Durchstichkraft bei abnehmendem Durchstichweg gekennzeichnet.

Eine weitere wichtige Anforderung ist eine homogene Dehnung der Folie in den tiefgezogenen Bereichen. In vielen Fällen wird dies nicht erfüllt, sondern es bildet sich im Tiefzug eine im folgenden als Tiefzuganomalie bezeichnete Struktur aus, die unmittelbar nebeneinanderliegende und abrupt ineinander übergehende dicke und dünne Bereiche enthält. Die dicken und dünnen Bereiche können sich mehrfach hintereinander wiederholen, so daß das optische Erscheinungsbild der Verpackung nachhaltig gestört ist. Erfahrungsgemäß kann auch diesem unerwünschten Phänomen mit dem Einsatz von Polyamiden niedriger Kristallinität begegnet werden.

Zwar läßt sich das Eigenschaftsbild einer polyamidhaltigen Folie durch den Einsatz von Copolyamiden gezielt beeinflussen, doch ist die Verwendung solcher copolymerisierter Polyamide durch ökonomische, anwendungstechnische und fertigungstechnische Faktoren eingeschränkt.

Die genannten, eine gute Ausformung oder einen homogenen Tiefzug ermöglichenden, Copolyamide oder die sie enthaltenden Mischungen haben sowohl in der fertigen Folie als auch während des Herstellvorgangs eine sehr hohe Klebeneigung. Stellt eine, ein solches Polyamid enthaltende Schicht die Außenlage einer Mehrschichtfolie dar, so weist diese Folie gegenüber sich selbst und gegenüber Metall im Vergleich zu Folienaußenseiten mit Polyamid 6 deutlich erhöhte Reibungskoeffizienten auf. Dies ist aus den folgenden Gründen nicht erwünscht.

Unmittelbar nach Verlassen der Tiefziehmaschine werden häufig die thermogeformten Behälter auf Rutschen und Förderbändern weitertransportiert, um in einer nächsten Station in einer Transportverpackung zusammengefaßt zu werden. Eine solche Transportverpackung ist beispielsweise ein Pappkarton. Typischerweise werden die einzelnen Muldenpackungen darin von Hand oder automatisch in dichter Packung neben- und übereinandergelegt. Bei diesem Vorgang ist es wichtig, daß die Muldenpackungen, insbesondere unter Einwirkung von Druck, äußerlich leicht gegeneinander verschieblich sind. Weisen die Packungen hingegen eine erhöhte Reibung und dadurch einen merklichen Widerstand gegenüber einer solchen Verschiebung auf, so kann sich der Einpackvorgang in die Transportverpackung verzögern und damit die gesamte Abpackgeschwindigkeit herabsetzen. Die genannten Rutschen, auf denen die Muldenverpackungen beispielsweise vom höhergelegen Förderband der Tiefziehmaschine auf ein tiefergeleges von der Tiefziehmaschine wegführendes Förderband transferiert werden können, sind üblicherweise aus oberflächlich bearbeitetem Edelstahl ausgeführt. Je nach Neigung und Oberflächenrauhigkeit einer solchen Rutsche kann dort ein Blocken der Muldenverpackungen auftreten. In solchen Fällen stauen sich an dieser Stelle die nachfolgenden Packungen auf und zwingen zu einer Unterbrechung des Abpackvorgangs. Eine wesentliche Voraussetzung für hohe Abpackgeschwindigkeiten ist daher eine hohe Gleitfähigkeit der Außenseite der eingesetzten Folie gegen sich selbst sowie gegen Metall.

Ein weiterer Nachteil dieser Copolyamide ist die ebenfalls gegenüber Polyamid 6 sehr hohe Klebeneigung im warmen Zustand. Wird eine Folie mit einem solchen Copolyamid oder einer dieses Copolyamid enthaltenden Mischung beispielsweise im Flachfolienverfahren hergestellt, so läuft sie an verschiedenen Stellen im Prozeß über warmtemperierte Metallwalzen. Dies kann beispielsweise die Gießwalze, die Kühlwalze oder etwa eine Walze im Kaschierwerk sein. Durch die hohe Klebeneigung auf diesen Walzen ist ein leichtes Ablösen der Folie nicht mehr gegeben. Dies führt einerseits zu Planlagemängeln der Folie. Andererseits kann es zu einem Erfassen der Folie durch sich selbst und damit zu Produktionsabbrüchen kommen.

Daneben geht die Verwendung von Copolyamiden stets mit höheren Materialkosten einher. Es ist also auch bei Folien, die aufbau- oder herstellungsbedingt die oben genannten Klebeprobleme nicht aufweisen, stets zwischen dem Grad der erwünschten Eigenschaftsverbesserung und den höheren Materialkosten abzuwägen.

Im Bereich flexibler Folien bietet die Verwendung von Polyamid 6 eine sehr ausgewogene Kombination aus Materialkosten, Festigkeit, Flexibilität, Gleitverhalten und Tiefziehbarkeit. Dieses Material kommt daher im weit überwiegenden Teil solcher Folien zur Anwendung.

Siegelbare Tiefziehfolien enthalten neben polyamidhaltigen Schichten auch eine im folgenden als Siegelschicht bezeichnete Schichtenfolge. Die Siegelschicht besteht im einfachsten Fall aus einer einzelnen Schicht. Diese Schicht besteht bevorzugt aus Polyolefinen, wie z.B. Polyethylen (PE-LD, PE-HD) oder Ethylen/a-Olefin-Copolymerisaten (PE-LLD), hergestellt mit konventionellen Ziegler-Natta-Katalysatoren bzw. mit Metallocen-Katalysatoren, oder aus aus Olefinen abgeleiteten Polymeren wie z.B. Ethylen/Vinylacetat-Copolymeren (E/VA), Ethylen-Copolymerisaten mit ungesättigten Estern (z.B. E/BA), Ethylen-Copolymerisaten mit ungesättigten Carbonsäuren (z.B. E/AA, E/MAA) und Ionomeren. Auch Mischungen aus den genannten Stoffklassen sind zur Erzielung gewünschter Eigenschaftskombinationen üblich.

Stand der Technik ist auch eine mehrschichtige Ausführung der Siegelschicht. So können die oben genannten Stoffe etwa zur Kostenoptimierung in einer solchen Weise angeordnet sein, daß die auf der Innenseite der Folie liegende, dem Produkt zugewandte, Schicht sich durch einen besonders frühen Siegelbeginn auszeichnet und die sich zur Folienmitte daran anschließende Schicht erst bei höheren Temperaturen schmilzt, jedoch dafür kostengünstiger ist oder durch eine höhere Schmelzefestigkeit die Produzierbarkeit einer solchen Siegelschicht als separate Blasfolie erst ermöglicht. Gegebenenfalls kommen auch haftvermittelnde Polymere aus den genannten Stoffgruppen oder auf deren Basis hergestellte, etwa mit Anhydrid durch Propfung modifizierte, Polymere zum Einsatz. Beispiele für solche Aufbauten sind die Schichtenfolgen PE-LD//E/VA oder PE-LD//E/AA//Ionomer.

Die Siegelschicht ermöglicht nach Überführung in den geschmolzenen Zustand eine feste Verbindung mit der Siegelschicht der Deckelfolie. Auf diese Weise gelingt es, die Verpackung luftdicht und mechanisch fest zu verschließen. Wichtigstes Merkmal der Siegelschicht ist daher ein Aufschmelzen bei deutlich niedrigeren Temperaturen als die festigkeitsbringenden Schichten der Mehrschichtfolie, d.h. üblicherweise die polyamidhaltigen Schichten.

Gegebenenfalls enthalten solche Folien daneben weitere Schichten, wie beispielsweise Schichten, die die Permeation bestimmter Gase durch die Folie vermindern. Ein Beispiel hierfür ist eine Sauerstoffsperrschicht aus einem Ethylen/Vinylalkohol-Copolymer (EVOH). Dabei wird bevorzugt EVOH in Coextrusion zwischen zwei PA-Schichten, das heißt mit der Schichtenfolge PA//EVOH//PA eingesetzt und enthält bevorzugt 40 bis 85 Mol-% Vinylacetat, das zu mindestens 90 % verseift ist.

Wichtig für eine gute Maschinengängigkeit solcher mehrschichtiger Verbunde ist, wie weiter oben benannt, auch die Gleitfähigkeit. Sie wird sowohl für die genannten polyolefinischen Materialien als auch für Polyamid nach dem Stand der Technik durch Additive verbessert. Hierzu werden Antiblockmittel in Form fester Partikel verwendet, die teilweise aus der Außenseite der Folie hervortreten und so die effektive Kontaktfläche zum benachbarten Medium verringern. Beispiele sind Siliziumoxid, Calciumcarbonat, Magnesiumsilikat, Aluminiumsilikat, Calciumphosphat, Talkum und dergleichen. Bevorzugt kommt daraus Siliziumdioxid zum Einsatz. Wirksame Mengen liegen im Bereich von 0,1 bis 2 Gewichts-%. Die mittlere Teilchengröße liegt zwischen 1 und 10 µm, wobei hier Teilchen mit kugelförmiger Gestalt besonders geeignet sind. In mehrlagigen Aufbauten werden diese Partikel bevorzugt nur in der äußeren Schicht eingesetzt.

Andere Additive, die die Gleitfähigkeit der Folie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gewichts-%, vorzugsweise 0,02 bis 1 Gewichts-%. Ein üblicherweise für Polyolefine eingesetztes aliphatisches Säureamid ist Erucasäureamid. Polyamide werden gewöhnlich mit Säureamiden aus höhersubstituierten Aminen ausgerüstet. Üblicherweise wird hier Ethylen-Bisstearylamid verwendet. Die genannten Materialien sind stets nur begrenzt im Polymer aufnahmefähig und lagern sich daher nach einer Verarbeitung zu einer Folie im Laufe der Zeit an den Außenseiten ab. Auf diese Weise wird dort ein gleitfähiger Film gebildet.

Die Siegelschicht und die polyamidhaltige Schicht bzw. die polyamidhaltigen Schichten sowie die weiteren Schichten sind üblicherweise miteinander und gegebenenfalls auch untereinander durch haftvermittelnde Schichten verbunden.

Dabei besteht die Möglichkeit, alle oder einen Teil der Schichten gemeinsam zu coextrudieren, d.h. die Polymere dieser Schichten als Schmelzeströme zusammenzuführen und in geschmolzener Form durch eine gemeinsame Düse strömen zu lassen. Für dieses Verfahren ist ein extrudierbarer Haftvermittler zur Verbindung erforderlich. Entsprechende Haftvermittler sind nach dem Stand der Technik beispielsweise mit Maleinsäureanhydrid modifizierte Polyolefine bzw. Copolymere enthaltend Olefine wie beispielsweise PE-LD, PE-LLD, PP, E/P oder E/VA. Folien des genannten Aufbaus lassen sich aber auch durch Extrusionsbeschichtung, das heißt dem Auftrag der Siegelschicht in geschmolzenem Zustand auf einen vorgefertigten polyamidhaltigen Trägerfilm, der auf der zu beschichtenden Seite bereits mit dem coextrudierten Haftvermittler oder einem nach der Extrusion aufgetragenen Primer versehen ist, herstellen. Werden Trägerfilm und Siegelschicht getrennt vorgefertigt, so können sie nach dem Stand der Technik auch durch Verwendung eines Kaschierklebstoffs verbunden werden. Solche Klebstoffe sind üblicherweise unmittelbar vor dem Auftrag vermischte Isocyanate und Polyole, die nach dem Auftrag zu Polyurethanen aushärten.

Dem Stand der Technik entspricht andererseits auch die Verwendung von Wasserbädern, Dampfkammern oder Benebelungsvorrichtungen im Zusammenhang mit der Herstellung von polyamidhaltigen Folien. Solche im folgenden als Feuchtkonditioniereinheiten bezeichneten Systeme verfolgen den Zweck, durch das umgebende Medium, sei es überhitzter Dampf, Sattdampf, Nebel oder flüssiges Wasser, die durch sie hindurchlaufende Folie mit Wasser anzureichern oder, um eine Temperung der Folie zu erreichen, Wärme in die Folie zu überführen. Auch eine Kombination von beidem kann erwünscht sein.

Die Auswirkungen von Feuchtigkeit auf Polyamid sind im Sinne physikalischer Eigenschaften ebenfalls seit längerem bekannt und beschrieben. Eine zusammenfassende Darstellung ist etwa *Kohan* (Melvin I. Kohan (Hrsg.): Nylon Plastics Handbook, Hanser Publishers, 1995, München) zu entnehmen.

So nehmen Polyamide in den amorphen Bereichen reversibel bis zu etwa 10% Wasser (PA 6) auf. Die Wassermoleküle bilden dabei Brücken zwischen den Säureamidgruppen und erhöhen auf diese Weise die Beweglichkeit der Molekülketten. Dieser Effekt schlägt sich in einer durch die Anwesenheit von Wasser deutlich reduzierten Glasübergangstemperatur nieder. Wasser wirkt somit in Polyamid plastifizierend. Damit einher geht eine Änderung der mechanischen Eigenschaften hin zu einer Erhöhung der Bruchdehnung, einer Abnahme der Steifigkeit (E-Modul), der Streckspannung und der Zugfestigkeit. Eine Definition der genannten Größen kann DIN EN ISO 527 entnommen werden.

Eine Feuchtigkeitsaufnahme wirkt sich bei Polyamiden auch in Form einer Dimensionsänderung aus. So erhöht sich zwar die Dichte des wasserhaltigen gegenüber trockenem Polyamid, es findet aber dennoch eine räumliche Ausdehnung durch die Wasseraufnahme statt. Wird über das wasserhaltige umgebende Medium jedoch auch Wärme in die Folie eingebracht, so kann es, insbesondere durch die feuchtebedingte Absenkung der Glasübergangstemperatur im Polyamid, zu einer Nachkristallisation und damit einer Dimensionsabnahme der polyamidhaltigen Bereiche kommen. Diese Umstände werden nach dem Stand der Technik ausgenutzt, um einem Einrollen einer polyamidhaltigen Mehrschichtfolie entgegenzuwirken.

Der Effekt läßt sich ebenfalls für eine Vorwegnahme des nachkristallisationsbedingten Schrumpfes auf der Folienrolle oder einem Abbau innerer Spannungen nutzen. Im Ergebnis wird stets eine besser planliegende Folie erhalten.

Es stellte sich die Aufgabe, eine flexible, versiegelbare Mehrschichtfolie bereitzustellen, die sowohl eine sehr gute Thermoformbarkeit als auch eine sehr gute Maschinengängigkeit auf Anlagen zur Folienherstellung und auf Verpackungsmaschinen aufweisen soll.

Die sehr gute Thermoformbarkeit umfaßt eine gute Ausformung und einen homogenen Auszug des Materials ohne Streifenbildung.

Für die sehr gute Maschinengängigkeit muß die Folie niedrige Reibkoeffizienten gegenüber Metall und gegenüber sich selbst sowie eine einen hohen Widerstand gegenüber Produktdurchstichen aufweisen.

Ferner muß die Folie auf üblichen Produktionsanlagen problemlos herstellbar sein.

Erfindungsgemäß gelang dies durch Bereitstellung einer siegelbaren ungereckten Mehrschichtfolie für die Verwendung als Tiefziehfolie, bestehend aus einer oder mehrerer polyamidhaltiger Schichten (I, I', I", etc.), einer Schichtenfolge (II) an der siegelseitigen Außenseite der Folie, gegebenenfalls einer oder mehrerer EVOH-haltiger Schichten (III, III', III", etc.) sowie gegebenenfalls weiterer Schichten, wobei die Mehrschichtfolie dadurch gekennzeichnet ist, daß sie, bezogen auf das Gesamtgewicht der PA- und EVOH-haltigen Schichten, vor der Verarbeitung zu einer Mulde einen Wasseranteil von wenigstens 0,5 und höchstens 2,5 Gewichts-% aufweist.

In bevorzugter Form enthält die erfindungsgemäße Mehrschichtfolie einen Wasseranteil von wenigstens 0,8 % und höchsten 2,0 %, in einer besonders bevorzugten Ausführung einen Wasseranteil von wenigstens 1,0 % und höchstens 2,0 %, bezogen auf das Gesamtgewicht der PA- und EVOH-haltigen Schichten.

Das in der Mehrschichtfolie enthaltene Wasser wird ihr während oder nach der Herstellung der Folie in einer dafür bestimmten Vorrichtung zugeführt. Die Folie enthält daher den erfindungsgemäßen Wasseranteil bereits im aufgewickelten Zustand als Rolle.

Folien, so auch PA-haltige Mehrschichtfolien für Tiefziehanwendungen, liegen zum Transport, für die Lagerung sowie zur Verarbeitung als Packstoff wegen der nur in dieser Form möglichen Handhabung generell als Rolle vor. In diesem Zustand ist bei PA-haltigen Mehrschichtfolien wegen der enthaltenen wasserdampfsperrenden Siegelschicht auf Basis von Polyolefinen oder Copolymerisaten aus Olefinen nur noch ein sehr begrenzter Austausch von Feuchtigkeit mit der Umgebung möglich. Der während oder nach der Herstellung in der Folie erreichte Wasseranteil kann sich daher auch bei längerer Lagerung nur in wenigen außen auf dem Wickel befindlichen Lagen verändern.

So können die Außenlagen einer aus einer erfindungsgemäßen Mehrschichtfolie gefertigten Rolle bei längerer Lagerung in trockener Umgebung auch niedrigere bzw. bei längerer Lagerung in feuchter Umgebung auch höhere als die erfindungsgemäßen Wasseranteile aufweisen.

Auch im Gegensatz zu PA-haltigen Mehrschichtfolien nach dem Stand der Technik weist die erfindungsgemäße Mehrschichtfolie gegebenenfalls bis auf wenige Außenlagen des Folienwickels über die gesamte Lauflänge der Rolle, üblicherweise enthalten Rollen mehrere hundert bis mehrere tausend Meter Folie, einen kontrolliert erhöhten Wasseranteil auf und zeigt daher auch über diese Lauflänge die geforderten guten Tiefzieheigenschaften. Dies ist Voraussetzung, um die geforderten Laufeigenschaften auf Verpackungsmaschinen zu gewährleisten.

Eine nur über einen kurzen Abschnitt und/oder für eine vorübergehende Zeit in der Zusammensetzung der erfindungsgemäßen Mehrschichtfolie entsprechende Folie ist daher für die Erfüllung der an die erfindungsgemäße Mehrschichtfolie gestellten Aufgaben nicht geeignet.

Das Vorliegen einer Rolle einer erfindungsgemäßen Mehrschichtfolie im Gegensatz zu einer nur äußerlich durch Atmosphärenkontakt aufgefeuchteten Folie kann beispielsweise dadurch überprüft werden, daß der Folienrolle vor Verarbeitung auf einer Tiefziehmaschine aus einer Position in einem radialen Abstand von wenigstens 20 mm innerhalb der Außenlage des Folienwickels sowie wenigstens 50 mm innerhalb der nächstgelegenen Schnittkante durch Aufschneiden des Folienwickels Abschnitte entnommen werden. Weisen diese nach einer Kontaktzeit von höchstens 20 Sekunden mit der sie auch während der Verarbeitung auf der Tiefziehmaschine umgebenden Atmosphäre den erfindungsgemäßen Wasseranteil auf, so handelt es sich um eine erfindungsgemäße Mehrschichtfolie.

Die polyamidhaltigen Schichten (I, I', I'', etc.) enthalten bevorzugt wenigstens 90 Gewichts-%, bezogen auf das Gesamtgewicht der jeweiligen Schicht, Polyamid der Typen Polyamid 6, Polyamid 10, Polyamid 12, Polyamid 66, Polyamid 610, Polyamid 61, Polyamid 612, Polyamid 6/66, Polyamid 6I/6T, Polyamid MXD6, Polyamid 6/6I, Polyamid 6/6T oder Mischungen daraus. In besonders bevorzugter Form werden Mischungen aus den genannten Polyamiden mit mindestens 80 Gewichts-% Polyamid 6, bezogen auf das Gesamtgewicht der Mischung, eingesetzt.

Die polyamidhaltigen Schichten der erfindungsgemäßen Folie können daneben auch übliche Additive wie Gleitmittel, Pigmente oder andere feste Füllstoffe jeglicher Art enthalten. Besonders geeignet sind feste anorganische oder organische Partikel im Größenbereich unterhalb von 1 µm zur Steuerung der Steifigkeit und Sauerstoffdurchlässigkeit der polyamidischen Schichten.

Die Schichtenfolge (II), oder Siegelschicht, besteht aus den üblicherweise als Siegelmedium verwendeten Polymeren. Dies sind beispielsweise Polyethylen (PE-LD und PE-HD) oder Polypropylen (PP). Daneben können Ethylen/a-Olefin-Copolymerisate (PE-LLD) verwendet werden. Sie können entweder mit konventionellen Ziegler-Natta-Katalysatoren oder mit Metallocen-Katalysatoren hergestellt werden. Daneben können andere Copolymerisate des Ethylens wie Ethylen/Propylen-Copolymere (E/P), Ethylen/Vinylacetat-Copolymere (E/VA), Ethylen-Copolymerisate mit ungesättigten Estern (E/BA), Ethylen-Copolymerisate mit ungesättigten Carbonsäuren (E/AA, E/MAA) und Ionomere zum Einsatz kommen.

Zur Erzielung besonderer Eigenschaften können die oben genannten in die Siegelschicht Eingang findenden Polymere auch in Form von Mischungen untereinander verwendet werden.

Die erfindungsgemäße Folie kann auch eine mehrschichtig ausgeführte Siegelschicht enthalten. So können die oben genannten Stoffe etwa zur Kostenoptimierung in einer solchen Weise angeordnet sein, daß die auf der Innenseite der Folie liegende, dem Produkt zugewandte, Schicht sich durch einen besonders frühen Siegelbeginn auszeichnet und die sich zur Folienmitte daran anschließende Schicht erst bei höheren Temperaturen schmilzt, jedoch dafür kostengünstiger ist oder durch eine höhere Schmelzefestigkeit die Produzierbarkeit einer solchen Siegelschicht als Blasfolie erst ermöglicht. Es können auch haftvermittelnde Polymere aus den genannten Stoffgruppen oder auf deren Basis hergestellte, etwa mit Anhydrid durch Propfung modifizierte, Polymere zum Einsatz kommen. Beispiele für solche Aufbauten sind die Schichtenfolgen PE-LD//E/VA oder PE-LD//E/AA//Ionomer.

Alle oder einzelne Lagen der Siegelschicht können zusätzlich mit Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 2 Gewichts-%, vorzugsweise 0,1 bis 0,8 Gewichts-%. Die mittlere Teilchengröße liegt zwischen 1 und 10 µm, bevorzugt 2 und 5 µm, wobei hier Teilchen mit kugelförmiger Gestalt besonders geeignet sind. In mehrlagigen Siegelschichten werden diese Partikel bevorzugt nur in der äußeren Schicht eingesetzt.

Andere Additive, die die Gleitfähigkeit der Folie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gewichts-%, vorzugsweise 0,02 bis 1 Gewichts-%. Besonders geeignet ist der Zusatz von höheren aliphatischen Säureamiden im Bereich von 0,01 bis 0,25 Gewichts-%. Ein insbesondere für die oben genannten, in der Siegelschicht verwendeten, Polymere geeignetes aliphatisches Säureamid ist Erucasäureamid.

Die erfindungsgemäße Folie kann zusätzlich zu den polyamidhaltigen Schichten (I) und der Schichtenfolge (II) auch eine oder meherere EVOH-haltige Schichten (III, III', III'', etc.) enthalten, wobei die Schichten (III, III', III", etc.) bevorzugt wenigstens 50 Gewichts-%, bezogen auf das Gesamtgewicht der jeweiligen EVOH-haltigen Schicht, eines EVOH mit wenigstens 85 und höchstens 40 Mol-% Vinylacetat, das zu wenigstens 90% verseift ist, enthalten. In einer besonders bevorzugten Form ist eine EVOH-haltige Schicht (III, III', III'', etc.) zwischen zwei polyamidhaltigen Schichten (I, I', I'', etc.) plaziert.

Die erfindungsgemäße Folie kann zusätzlich zu den Schichten (I), (II) und gegebenenfalls (III) haftvermittelnde Schichten (IV) enthalten. Eine solche haftvermittelnde Schicht ist bevorzugt ein Kaschierklebstoff auf Basis von Polyurethanen oder Polyesterurethanen oder ein extrudierbarer Haftvermittler. Als extrudierbarer Haftvermittler werden bevorzugt modifizierte Polyolefine eingesetzt. In bevorzugter Form sind dies Polyolefine mit Carboxylgruppen, wie z.B. Polyethylen, Polypropylen, Ethylen/α-Olefin-Copolymerisate oder Ethylen/Vinylacetat-Copolymerisate, die mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sind. Als extrudierbare Haftvermittler können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester oder entsprechende Pfropfpolymere auf Polyolefine wie z.B. Polyethylen, Polypropylen oder Ethylen/α-Olefin-Copolymerisate, die mit einem Monomer der genannten ungesättigten Säuren pfropfpolymerisiert sind, zum Einsatz kommen. Besonders bevorzugt sind Polyolefine mit aufgepfropftem α,β-einfach ungesättigten Dicarbonsäureanhydrid, insbesondere mit Maleinsäureanhydrid gepropfte Ethylen/α-Olefin-Copolymerisate.

Mit der erfindungsgemäßen Mehrschichtfolie gelingt es, eine zu einer flexiblen, thermogeformten Mulde verarbeitbare Folie bereitzustellen, die sich durch eine hohe Durchstichfestigkeit sowie einen streifenfreien Tiefzug auszeichnet. Es war nicht zu erwarten, daß die Folie daneben auch eine geringe Klebeneigung gegen sich selbst und Metall aufweist.

Für den Erfinder überraschend ermöglicht die Einhaltung eines definierten Bereichs des Feuchtegehalts gegenüber üblichen Folien eine deutlich verbesserte Ausformung. Zu hohe oder zu niedrige Feuchtegehalte führen nicht auf diese Verbesserung.

Die Produzierbarkeit der erfindungsgemäßen Folie erweist sich auch als Flachfilm als völlig unproblematisch.

Die erfindungsgemäße Mehrschichtfolie erlaubt daher eine sonst nur mit erheblich höheren Materialkosten zu erzielende Verbesserung in den Tiefzieheigenschaften sowie darüber hinaus eine mit diesen konventionellen Einsatzstoffen nicht erreichbare Maschinengängigkeit. Die vorliegende erfindungsgemäße Folie bringt somit einen hohen ökonomischen Vorteil mit sich.

Insbesondere beim Einsatz EVOH-haltiger Folien ist das Erreichen guter Tiefzieheigenschaften, insbesondere was einen streifenfreien Tiefzug betrifft, durch Folien nach dem Stand der Technik bekanntermaßen nicht gewährleistet, siehe beispielsweise *Modern Plastics International, Januar 1997, S. 109*. Die erfindungsgemäße Folie stellt erstmals einen sehr streifenarm tiefziehbaren EVOH-haltigen Aufbau dar.

Die erfindungsgemäße Folie läßt sich auf üblichen Anlagen zur Produktion von Mehrschichtfolien herstellen.

Dabei besteht die Möglichkeit, alle oder einen Teil der Schichten gemeinsam zu coextrudieren, d.h. die Polymere dieser Schichten als Schmelzeströme zusammenzuführen und in geschmolzener Form durch eine gemeinsame Düse strömen zu lassen. Die erfindungsgemäße Mehrschichtfolie läßt sich aber auch durch Extrusionsbeschichtung, das heißt dem Auftrag der Siegelschicht in geschmolzenem Zustand auf einen vorgefertigten polyamidhaltigen Trägerfilm, herstellen. Werden Trägerfilm und Siegelschicht getrennt vorgefertigt, so können sie auch durch Verwendung eines Kaschierklebstoffs verbunden werden. Die gesamte Mehrschichtfolie oder Teilverbunde können dabei sowohl mit der Blasfilm- als auch der Flachfilmtechnologie hergestellt werden.

Die gesamte Mehrschichtfolie oder ein Teilverbund mit wenigstens einer polyamidhaltigen Schicht kann durch die Verwendung eines Wasserbades, einer Dampfkammer oder einer Benebelungsvorrichtung mit dem erfindungsgemäßen Wassergehalt beaufschlagt werden. Dabei sind die genannten Feuchtkonditioniereinheiten bevorzugt in eine der genannten Produktionslinien für die Mehrschichtfolie oder den Teilverbund der Mehrschichtfolie in der Weise integriert, daß die zu befeuchtende Folie vor dem Aufwickeln durch diese hindurchläuft.

### Beispiele

### Vergleichsbeispiel 1:

Ein Trägerfilm mit der Schichtenfolge PA/EVOH/PA in den Dicken 22 / 6 / 22 µm wird über einen Kaschierkleber mit einer Schichtdicke von 2µm mit einer 100 µm dicken Siegelschicht aus einem Gemisch aus jeweils 50 Gewichts-% PE-LLD und PE-LD zu einem Laminat mit dem Aufbau PA/EVOH/PA//Kleber//(50 % PE-LLD + 50 % PE-LD) verbunden. Das Ethylen/Buten-Copolymerisat (LLDPE) hat eine Dichte von 919 g/cm³, einen Schmelzpunkt von 124°C sowie einen MFR von 4,4 g/10min bei 190°C und 2,16 kg und ist ausgerüstet mit 500 ppm Erucasäureamid und 1000 ppm Siliziumoxid der mittleren Teilchengröße 15 µm, das additivfreie LDPE eine Dichte von 920 g/cm³, einen Schmelzpunkt von 108°C und einen MFR von 1 g/10 min bei 190°C und 2,16 kg. Der Kaschierkleber ist ein polyurethanbasierendes System. Das verwendete Polyamid ist PA6 mit einem Kristallitschmelzpunkt von 220°C und einer relativen Viskosität in 98 %-iger Schwefelsäure von 3,6. Es enthält 600 ppm Ethylen-Bisstearylamid. Das EVOH ist ein Copolymer aus monomeren Einheiten des Ethylen und des Vinylalkohols, wobei der Anteil des Ethylen bezogen auf das gesamte Polymer 32 Mol-% beträgt und das EVOH einen Schmelzpunkt von 181°C sowie einen MFR von 1,3 bei 210°C und 2,16 kg aufweist. Der Wassergehalt der Folie, bezogen auf das in der Folie enthaltene PA und EVOH, beträgt 0,25 Gewichts-% durch Kontakt mit der umgebenden Atmosphäre während der Folienherstellung.

### Beispiel 2 bis 4 und Vergleichsbeispiele 5 bis 6:

Die Folie aus Vergleichsbeispiel 1 wurde nach der Laminierung mit verschiedenen Verweilzeiten durch eine Konditionierkammer mit gesättigtem Wasserdampf bei einer Temperatur von 50°C geführt und anschließend wieder zu einer Rolle aufgewickelt.

Die Folien weisen jeweils den in untenstehender Tabelle angegebenen Wassergehalt, bezogen auf das in der Folie enthaltene PA und EVOH, auf.

### Vergleichsbeispiel 7:

Ein Trägerfilm aus dem in Vergleichsbeispiel 1 verwendetem PA6 in der Dicke 50 µm wird über den Kaschierkleber aus Vergleichsbeispiel 1 mit der Siegelschicht aus Vergleichsbeispiel 1 zu einem Laminat verbunden. Der Wassergehalt der Folie, bezogen auf das in der Folie enthaltene PA und EVOH, beträgt durch Kontakt mit der umgebenden Atmosphäre 0,3 Gewichts-%.

### Beispiel 8 und Vergleichsbeispiel 9:

Die Folie aus Vergleichsbeispiel 7 wurde durch die Kammer aus Beispiel 2 bis 6 geführt und anschließend wieder zu einer Rolle aufgewickelt. Die Folien weisen einen Wassergehalt, bezogen auf das in der Folie enthaltene PA, von 0,8 Gewichts-% für Beispiel 8 und 3,5 Gewichts-% für Vergleichsbeispiel 9 auf.

### Vergleichsbeispiel 10:

Ein Polyamidfilm der Dicke 50 µm wird über den Kaschierkleber aus Vergleichsbeispiel 1 mit der Siegelschicht aus Vergleichsbeispiel 1 zu einem Laminat verbunden. Das verwendete Polyamid ist ein Copolyamid vom Typ PA6/66 mit einem Schmelzpunkt von 195°C. Es enthält 600 ppm eines sekundären Stearamids als Gleitmittel. Das Laminat weist durch Kontakt mit der umgebenden Atmosphäre einen Wassergehalt, bezogen auf das in der Folie enthaltene PA6/66, von 0,3 Gewichts-% auf.

An den gefertigten Mustern wurden die folgenden physikalischen und anwendungstechnischen Eigenschaften wie folgt gemessen:
- Das Reibungsverhalten nach DIN 53 375. Gemessen werden die Reibkoeffizienten für die Haftreibung zwischen Folie und Folie sowie zwischen Folie und Metall. Es wird stets die Polyamidaußenseite der beispielhaften Folien untersucht.
- Die Durchstichfestigkeit als die zum Durchstechen einer membranartig aufgespannten Folie mit einem spitzen Prüfdorn von der Siegelseite aus notwendige Kraft, der notwendige Weg sowie die notwendige Arbeit. Dabei ist die Durchsticharbeit für die Beurteilung der Festigkeit gegenüber spitzen Gegenständen in der Praxis erfahrungsgemäß am besten geeignet. Die Messung erfolgt mit einer elektronischen Zugprüfmaschine der Klasse 1 nach DIN 51 221 mit einer Prüfgeschwindigkeit von 100 mm/min. Dazu werden aus der Folie kreisförmige Muster mit einem Durchmesser von 80 mm entnommen und membranartig in die einen Durchmesser von 50 mm aufweisende Probenhalterung des Prüfgerätes eingespannt. Der Prüfdorn ist aus Metall gefertigt und hat einen Durchmesser von 2 mm. An seiner Spitze verjüngt er sich über eine Länge von 5 mm auf einen Durchmesser von 1 mm, wobei der vordere Teil mit einem Radius von 0,5 mm abgerundet ist. Die Durchsticharbeit ergibt sich durch Integration der auf den Prüfdorn wirkenden Kraft über den von ihm zurückgelegten Weg bis zum Versagen der Folie. Sämtliche Untersuchungsschritte wurden bei 23°C und 50 % relativer Luftfeuchtigkeit vorgenommen. Die Probenpräparation und Durchführung der Messung dauerte in allen Fällen ca. 80 Sekunden, so daß der ursprüngliche Feuchtegehalt der Folie weitestmöglich noch während der Messung erhalten blieb. Die Prüfungen wurden jeweils an drei Mustern durchgeführt und die Ergebnisse gemittelt.
- Die Beurteilung der Tiefziehbarkeit erfolgte an einer Tiefziehmaschine vom Typ Tiromat 3000 der Fa. Alfa Laval. Die Folien wurden bei einer Tiefziehtemperatur von 80°C verarbeitet, eine Beheizung erfolgte durch Kontakt mit einer entsprechend temperierten Heizplatte. Heiz- und Formzeit betrugen jeweils 3 Sekunden. Die Muldengröße betrug 184 mm x 114 mm (Länge x Breite). An solcherart auf eine Tiefe von 60 mm tiefgezogene Mulden wurde mittels eines Stahlmaßbandes die Konturlänge der Mulde L_{M} zwischen den Mittenpositionen der beiden Längskanten gemessen. Mit der entsprechenden Konturlänge L_{W} des Muldenwerkzeugs und der Ausgangslänge L₀ der zu verformenden Folie ergibt sich so eine relative fehlende Ausformung als D=(L_{W} - L_{M})/( L_{W} - L₀).

Die Messung der Muldenkonturlänge erfolgte dabei 60 Sekunden nach Verlassen der Tiefziehstation, d.h. zu einem Zeitpunkt, an dem typischerweise ein Füllgut in die Mulde eingelegt werden kann.

Die mit einer Werkzeugtiefe von 60 mm tiefgezogenen Mulden wurden außerdem qualitativ hinsichtlich des Auftretens von Tiefzuganomalien bewertet. Dabei bedeutet
+ : keine oder schwach erkennbare Streifen in einem Bereich der Mulde
o : deutlich erkennbare Streifen in einem Bereich der Mulde
- : optisch stark störende Streifen in einem Bereich der Mulde

- Die Beurteilung der Maschinengängigkeit des Polyamidfilms während der Extrusion wurde ebenfalls qualitativ beurteilt. Dabei bedeutet
   ++ : kein merkliches Kleben an Walzen
   + : schwaches Kleben an Walzen
   o : deutliches Kleben an Walzen
   - : für die Verarbeitung nicht akzeptables Kleben an Walzen

Die Ergebnisse sind in untenstehenden Tabellen zusammengefaßt:

| *Eigenschaften PA- und EVOH-haltiger erfindungsgemäßer Folien und Vergleichsmuster* | | | | | | | |
|---|---|---|---|---|---|---|---|
| *Merkmal* | *Einheit* | *Beispiel bzw. Vergleichsbeispiel* | | | | | |
| | | *Vgl. 1* | *Bsp. 2* | *Bsp. 3* | *Bsp. 4* | *Vgl. 5* | *Vgl. 6* |
| Wassergehalt bezogen auf PA und EVOH | Gew-% | 0,25 | 0,7 | 1,4 | 2,5 | 3,4 | 9,5 |
| fehlende Ausformung D | % | 14,0 | 7,6 | 5,7 | 8,6 | 11,0 | 16,0 |
| Durchsticharbeit | N cm | 1,8 | 2,4 | 2,9 | 3,1 | 3,5 | 3,8 |
| Haftreibkoeffizient Folie / Folie | - | 0,21 | 0,23 | 0,22 | 0,22 | 0,24 | 0,25 |
| Haftreibkoeffizient Folie / Metall | - | 0,16 | 0,17 | 0,18 | 0,18 | 0,20 | 0,20 |
| Grad der Tiefziehanomalien | Note | - | + | + | + | + | + |
| Klebeneigung auf Walzen | Note | ++ | ++ | ++ | ++ | ++ | ++ |

| *Eigenschaften PA-haltiger erfindungsgemäßer Folien und Vergleichsmuster* | | | | | |
|---|---|---|---|---|---|
| *Merkmal* | *Einheit* | *Beispiel bzw. Vergleichsbeispiel* | | | |
| | | *Vgl.7* | *Bsp.8* | *Vgl.9* | *Vgl.10* |
| Wassergehalt bezogen auf PA und EVOH | Gew-% | 0,3 | 0,8 | 3,5 | 0,3 |
| fehlende Ausformung D | % | 12,9 | 8,8 | 17,1 | 8,6 |
| Durchsticharbeit | N cm | 1,37 | 2,8 | 3,1 | 1,8 |
| Haftreibkoeffizient Folie / Folie | - | 0,25 | 0,24 | 0,25 | 0,45 |
| Haftreibkoeffizient Folie / Metall | - | 0,18 | 0,19 | 0,19 | 0,39 |
| Grad der Tiefziehanomalien | Note | - | + | + | + |
| Klebeneigung auf Walzen | Note | ++ | ++ | ++ | -- |

In einem Bereich zwischen 0,5 und 2,5 Gewichtsprozent Wasser, bezogen auf das Gesamtgewicht der PA- und EVOH-haltigen Schichten, liegt ein deutliches Optimum in der Ausformung der beispielhaften Folien. In diesem Bereich wird auch ein homogener Tiefzug, gute Gleiteigenschaften und eine hohe Durchstichfestigkeit erreicht. Bei niedrigeren Wassergehalten sind Ausformung, Tiefziehanomalien und Durchstichfestigkeit zu ungünstig, höhere Wasseranteile führen bei zwar hohen Durchstichfestigkeiten und einem streifenarmen Tiefzug auf ebenfalls zu niedrige Ausformungen. Die Unterschiede in der Ausformung sind bei der gewählten Muldengeometrie und dem gewählten objektivierbaren Meßverfahren bereits erheblich. In den Muldenecken überlagern sich die Ausformungsdefizite in Längs- und Querrichtung, so daß es hier zu noch augenfälligeren Unterschieden in der Ausformung und damit einhergehend zu den oben beschriebenen Problemen mit dem Einlegen des Füllguts kommt. Eine objektivierbare Messung ist in diesem Bereich jedoch schwer durchzuführen.

## Patentansprüche

1. Thermoverformbare, ungereckte, siegelbare Mehrschichtfolie bestehend aus einer oder mehreren polyamidhaltigen Schichten, einer Schichtenfolge oder einer Siegelschicht an der siegelseitigen Außenseite der Folie, ggf. einer oder mehreren EVOH-haltigen Schichten sowie ggf. weiteren Schichten, **dadurch gekennzeichnet, dass** die Mehrschichtfolie einen Wasseranteil von wenigstens 0,5 Gew% und höchstens 2,5 Gew%, bezogen auf das Gesamtgewicht der PA- und EVOH-haltigen Schichten, aufweist.

2. Mehrschichtfolie nach Anspruch 1, **dadurch gekennzeichnet, dass** sie einen Wasseranteil von wenigstens 0,8 Gew% und höchstens 2 Gew%, bezogen auf das Gesamtgewicht der PA- und der EVOH-haltigen Schichten, aufweist.

3. Mehrschichtfolie nach Anspruch 1 oder 2, **dadurch gekennzeichnet, dass** sie eine Wasseranteil von wenigstens 1 Gew% und höchstens 2 Gew%, bezogen auf das Gesamtgewicht der PA- und EVOH-haltigen Schichten, aufweist.

4. Mehrschichtfolie nach einem der Ansprüche 1 bis 3, **dadurch gekennzeichnet, dass** wenigstens eine polyamidhaltige Schicht wenigstens 50 Gew% von wenigstens einem Polyamid aus der Gruppe Polyamid 6, Polyamid 10, Polyamid 12, Polyamid 66, Polyamid 610, Polyamid 61, Polyamid 6/12, Polyamid 6/66, Polyamid 6I/6T, Polyamid MXD6, Polyamid 6/61, Polyamid 6/6T oder deren Mischungen enthält.

5. Mehrschichtfolie nach Anspruch 4, **dadurch gekennzeichnet, dass** wenigstens eine polyamidhaltige Schicht wenigstens 80 Gew% von wenigstens einem Polyamid aus der Gruppe Polyamid 6, Polyamid 10, Polyamid 12, Polyamid 66, Polyamid 610, Polyamid 61, Polyamid 6/12, Polyamid 6/66, Polyamid 6I/6T, Polyamid MXD6, Polyamid 6/6I, Polyamid 6/6T oder deren Mischungen enthält.

6. Mehrschichtfolie nach Anspruch 4 oder 5, **dadurch gekennzeichnet, dass** wenigstens eine polyamidhaltige Schicht zu wenigstens 80 Gew%, bezogen auf das Gewicht dieser Schicht, aus Polyamid 6 besteht.

7. Mehrschichtfolie nach einem der Ansprüche 1 bis 6, **dadurch gekennzeichnet, dass** wenigstens eine polyamidhaltige Schicht neben Polyamid kein weiteres Polymeres enthält.

8. Mehrschichtfolie nach einem der Ansprüche 1 bis 7, **dadurch gekennzeichnet, dass** sie wenigstens eine EVOH-haltige Schicht enthält.

9. Mehrschichtfolie nach Anspruch 8, **dadurch gekennzeichnet, dass** wenigstens eine EVOH-haltige Schicht mindestens 50 Gew%, bezogen auf das Gesamtgewicht dieser Schicht, eines Ethylen/Vinylalkohol-Copolymerisats (EVOH) enthält.

10. Mehrschichtfolie nach einem der Ansprüche 1 bis 9, **dadurch gekennzeichnet, dass** die Schichtenfolge aus mindestens einer Schicht besteht, die jeweils pro Schicht wenigstens ein Polymer aus der Gruppe Polyethylene (PE-LD und PE-HD), Ethylen/α-Olefin-Copolymerisate (PE-LLD), Ethylen/Propylen-Copolymere (E/P), Ethylen/Vinylacetat-Copolymere (E/VA), Copolymerisate von Ethylen mit ungesättigten Estern (E/BA), Copolymerisate von Ethylen mit α,β-einfach ungesättigten Dicarbonsäuren, Polypropylene, Copolymerisate von Ethylen mit Vinylacetat, Copolymerisate von Ethylen mit α,β-einfach ungesättigten Dicarbonsäuren, die mit mindestens einem Monomer aus der Gruppe der α,β-einfach ungesättigten Dicarbonsäuren, deren Säureanhydriden, Säureestern, Säureamiden oder Säureimiden gepfropft sind, enthält.

11. Mehrschichtfolie nach einem der Ansprüche 1 bis 10, **dadurch gekennzeichnet, dass** sie eine oder mehrere haftvermittelnde Schichten enthält.

12. Mehrschichtfolie nach einem der Ansprüche 1 bis 11, **dadurch gekennzeichnet, dass** sie den Wasseranteil vor ihrer Verarbeitung aufweist.

13. Mehrschichtfolie nach einem der Ansprüche 1 bis 12, **dadurch gekennzeichnet, dass** sie mit einer Länge von wenigstens 100 m in aufgerollter Form vorliegt.

14. Verwendung einer Mehrschichtfolie nach einem der Ansprüche 1 bis 13, als Verpackungsmaterial.

15. Verwendung nach Anspruch 14 zum Verpacken von Lebensmitteln.

## Claims

1. Thermoformable, unstretched, sealable multilayer film composed of one or more polyamide-containing layers, of a layer sequence or of a sealable layer on the sealable outer side of the film, and, where appropriate, of one or more EVOH-containing layers, and also, where appropriate, of other layers, **characterized in that** the multilayer film has a water content of at least 0.5% by weight and at most 2.5% by weight, based on the total weight of the PA- and EVOH-containing layers.

2. Multilayer film according to Claim 1, **characterized in that** it has a water content of at least 0.8% by weight and at most 2% by weight, based on the total weight of the PA- and the EVOH-containing layers.

3. Multilayer film according to Claim 1 or 2, **characterized in that** it has a water content of at least 1% by weight and at most 2% by weight, based on the total weight of the PA- and EVOH-containing layers.

4. Multilayer film according to any of Claims 1 to 3, **characterized in that** at least one polyamide-containing layer comprises at least 50% by weight of at least one polyamide from the group of nylon-6, nylon-10, nylon-12, nylon-6,6, nylon-6,10, nylon-6,I, nylon-6/12, nylon-6/6,6, nylon-6,I/6,T, nylon-MXD,6, nylon-6/6,I, nylon-6/6,T or their mixtures.

5. Multilayer film according to Claim 4, **characterized in that** at least one polyamide-containing layer comprises at least 80% by weight of at least one polyamide from the group of nylon-6, nylon-10, nylon-12, nylon-6,6, nylon-6,10, nylon-6,I, nylon-6/12, nylon-6/6,6, nylon-6,I/6,T, nylon-MXD,6, nylon-6/6,I, nylon-6/6,T or their mixtures.

6. Multilayer film according to Claim 4 or 5, **characterized in that** at least one polyamide-containing layer is composed of at least 80% by weight, based on the weight of this layer, of nylon-6.

7. Multilayer film according to any of Claims 1 to 6, **characterized in that** at least one polyamide-containing layer comprises no other polymer besides polyamide.

8. Multilayer film according to any of Claims 1 to 7, **characterized in that** it comprises at least one EVOH-containing layer.

9. Multilayer film according to Claim 8, **characterized in that** at least one EVOH-containing layer comprises at least 50% by weight, based on the total weight of this layer, of an ethylene-vinyl alcohol copolymer (EVOH).

10. Multilayer film according to any of Claims 1 to 9, **characterized in that** the layer sequence is composed of at least one layer, where each layer comprises at least one polymer from the group of polyethylenes (LDPE and HDPE), ethylene-α-olefin copolymers (LLDPE), ethylene-propylene copolymers (E-P), ethylene-vinyl acetate copolymers (E-VA), copolymers of ethylene with unsaturated esters (E-BA), copolymers of ethylene with α,β-mono-unsaturated dicarboxylic acids, and of polypropylenes, copolymers of ethylene with vinyl acetate, copolymers of ethylene with α,β-mono-unsaturated dicarboxylic acids which have been grafted with at least one monomer from the group of the α,β-monounsaturated dicarboxylic acids, or with their anhydrides, esters, amides, or imides.

11. Multilayer film according to any of Claims 1 to 10, **characterized in that** it comprises one or more adhesion-promoting layers.

12. Multilayer film according to any of Claims 1 to 11, **characterized in that** its water content is present prior to its processing.

13. Multilayer film according to any of Claims 1 to 12, **characterized in that** it has a rolled-up length of at least 100 m.

14. Use of a multilayer film according to any of Claims 1 to 13 as packaging material.

15. Use according to Claim 14 for the packaging of food or drink.

## Revendications

1. Feuille multicouche thermoformable, non étirée, scellable, constituée par une ou plusieurs couches contenant du polyamide, une succession de couches ou une couche scellable sur le côté extérieur, du côté scellement, de la feuille, le cas échéant une ou plusieurs couches contenant un EVOH ainsi que, le cas échéant, d'autres couches, **caractérisée en ce que** la feuille multicouche présente une proportion d'eau d'au moins 0,5% en poids et d'au plus 2,5% en poids par rapport au poids total des couches contenant du PA et un EVOH.

2. Feuille multicouche selon la revendication 1, **caractérisée en ce qu'**elle présente une proportion d'eau d'au moins 0,8% en poids et d'au plus 2% en poids par rapport au poids total des couches contenant du PA et un EVOH.

3. Feuille multicouche selon la revendication 1 ou 2, **caractérisée en ce qu'**elle présente une proportion d'eau d'au moins 1% en poids et d'au plus 2% en poids par rapport au poids total des couches contenant du PA et un EVOH.

4. Feuille multicouche selon l'une quelconque des revendications 1 à 3, **caractérisée en ce qu'**elle contient au moins 50% en poids d'au moins un polyamide du groupe constitué par le Polyamide 6, le Polyamide 10, le Polyamide 12, le Polyamide 66, le Polyamide 610, le Polyamide 61, le Polyamide 6/12, le Polyamide 6/66, le Polyamide 6I/6T, le Polyamide MXD6, le Polyamide 6/6I, le Polyamide 6/6T ou leurs mélanges.

5. Feuille multicouche selon la revendication 4, **caractérisée en ce qu'**au moins une couche contenant du polyamide contient au moins 80% en poids d'au moins un polyamide du groupe constitué par le Polyamide 6, le Polyamide 10, le Polyamide 12, le Polyamide 66, le Polyamide 610, le Polyamide 6I, le Polyamide 6/12, le Polyamide 6/66, le Polyamide 6I/6T, le Polyamide MXD6, le Polyamide 6/6I, le Polyamide 6/6T ou leurs mélanges.

6. Feuille multicouche selon la revendication 4 ou 5, **caractérisée en ce qu'**au moins une couche contenant du polyamide est constituée par au moins 80% en poids par rapport au poids de cette couche de Polyamide 6.

7. Feuille multicouche selon l'une quelconque des revendications 1 à 6, **caractérisée en ce qu'**au moins une couche contenant du polyamide ne contient pas d'autre polymère que le polyamide.

8. Feuille multicouche selon l'une quelconque des revendications 1 à 7, **caractérisée en ce qu'**elle contient au moins une couche contenant un EVOH.

9. Feuille multicouche selon la revendication 8, **caractérisée en ce qu'**au moins une couche contenant un EVOH contient au moins 50% en poids, par rapport au poids total de cette couche, d'un copolymère d'éthylène/alcool vinylique (EVOH).

10. Feuille multicouche selon l'une quelconque des revendications 1 à 9, **caractérisée en ce que** la succession de couches est constituée par au moins une couche qui contient par couche au moins un polymère du groupe constitué par le polyéthylène (PE-LD et PE-HD), les copolymères d'éthylène/α-oléfine (PE-LLD), les copolymères d'éthylène/propylène (E/P), les copolymères d'éthylène/acétate de vinyle (E/VA), les copolymères d'éthylène avec des esters insaturés (E/BA), les copolymères d'éthylène avec des acides dicarboxyliques α,β-monoinsaturés, les polypropylènes, les copolymères d'éthylène avec de l'acétate de vinyle, les copolymères d'éthylène avec des acides dicarboxyliques α,β-monoinsaturés qui sont greffés avec au moins un monomère du groupe des acides dicarboxyliques α,β-monoinsaturés, leurs anhydrides d'acides, esters d'acide, amides d'acide ou imides d'acide.

11. Feuille multicouche selon l'une quelconque des revendications 1 à 10, **caractérisée en ce qu'**elle contient une ou plusieurs couches qui sont des promoteurs d'adhérence.

12. Feuille multicouche selon l'une quelconque des revendications 1 à 11, **caractérisée en ce qu'**elle présente la proportion d'eau avant sa transformation.

13. Feuille multicouche selon l'une quelconque des revendications 1 à 12, **caractérisée en ce qu'**elle se trouve en une longueur d'au moins 100 m sous une forme enroulée.

14. Utilisation d'une feuille multicouche selon l'une quelconque des revendications 1 à 13 comme matériau d'emballage.

15. Utilisation selon la revendication 14 pour emballer des aliments.
